# EUROPÄISCHE PATENTANMELDUNG

(11) **EP 0 809 134 A1**
(43) Veröffentlichungstag der Anmeldung: **26.11.1997**
(21) Anmeldenummer: 96810324.2
(22) Anmeldetag: 22.05.1996
(51) Int. Cl.: G03B 27/70, G03B 27/54

(54) **Beleuchtungsvorrichtung für ein fotografisches Kopiergerät**

(71) Anmelder: GRETAG IMAGING AG, CH-8105 Regensdorf (CH)
(72) Erfinder: Kraft, Walter, CH-8049 Zürich (CH)
(74) Vertreter: Schwabe - Sandmair - Marx

(57) **Zusammenfassung**

Eine Beleuchtungsvorrichtung für ein fotografisches Kopiergerät umfasst eine Lichtquelle (2) zum Aussenden von Kopierlicht, einen Lichtmischer (4), sowie Mittel, um das von der Lichtquelle (2) ausgesendete Kopierlicht dem Lichtmischer (4) zuzuführen. Diese Mittel beinhalten einen Umlenkspiegel (3;3a), welcher im infraroten Wellenlängenbereich im wesentlichen transparent ist, und welcher im sichtbaren Wellenlängenbereich ein Reflexionsvermögen aufweist, das drei spektral schmalbandige Maxima hat, die in den Wellenlängenbereichen von rotem, grünem sowie blauem Licht liegen.

## Beschreibung

Die Erfindung betrifft eine Beleuchtungsvorrichtung für ein fotografisches Kopiergerät gemäss dem Oberbegriff des Anspruchs 1.

In bekannten fotografischen Kopiergeräten werden Kopien von Kopiervorlagen üblicherweise derart erstellt, dass die Kopiervorlagen, beispielsweise die Bildfelder eines Negativfilmstreifens, zunächst hinsichtlich ihrer Dichte und Farbe ausgemessen und daraus die benötigten Kopierlichtmengen in den drei Grundfarben rot, blau und grün bestimmt werden. Anschliessend werden die Bildfelder mittels der bestimmten Kopierlichtmengen auf fotografisches Kopiermaterial, beispielsweise Fotopapier aufbelichtet. Bei der Aufbelichtung wird dabei das zu kopierende Bildfeld mittels einer Beleuchtungsvorrichtung und einer Abbildungsoptik auf das fotografische Kopiermaterial abgebildet. Zur Realisierung der benötigten Kopierlichtmengen in den drei Grundfarben sind vom Stand der Technik her zahlreiche Verfahren und Vorrichtungen bekannt.

Eine Möglichkeit besteht z. B. darin, zur Emission des Kopierlichts eine Lichtquelle zu verwenden, welche "weisses" Licht emittiert, beispielsweise eine Halogenlampe, und dieses weisse Licht entsprechend den gewünschten Kopierlichtmengen in den drei Grundfarben einzufärben. Dazu sind z. B. optische Farbfilter in den Komplementärfarben gelb, magenta und cyan vorgesehen, die mehr oder weniger tief in den Belichtungsstrahlengang einbringbar sind. Auf diese Weise können die drei Farbanteile (rot, grün, blau) im Kopierlicht jeweils so abgeschwächt werden, dass das Kopierlicht die gewünschte Einfärbung erhält.

Eine andere Möglichkeit der Belichtung besteht darin, ebenfalls eine Weisslichtquelle zu verwenden und sequentiell Rot-, Blau- und Grün-Filter vollständig in den Belichtungsstrahlengang einzubringen, so dass die Belichtung in den drei Grundfarben hintereinander erfolgt.

Die zeitliche Dauer der Belichtung, welche neben der Kopierlichtintensität ebenfalls die Kopierlichtmenge bestimmt, wird üblicherweise durch eine Verschlusseinrichtung im Beleuchtungsstrahlengang zwischen der Lichtquelle und dem Kopiermaterial kontrolliert. Im geschlossenen Zustand verhindert die Verschlusseinrichtung die Beaufschlagung des Kopiermaterials durch das Kopierlicht, ist sie dagegen geöffnet, so gelangt das Kopierlicht auf das Kopiermaterial.

Eine möglichst farbentreue Wiedergabe der Kopiervorlage bedingt unter anderem, dass die spezielle Charakteristik des Fotopapiers bei der Einfärbung des Kopierlichts bzw. bei der Belichtung berücksichtigt wird. Die drei Farbschichten (Gelb, Magenta, Cyan) eines Fotopapiers reagieren je nach Wellenlänge unterschiedlich auf das sie beaufschlagende Licht. Im allgemeinen weist die spektrale Empfindlichkeit eines Fotopapiers als Funktion der Wellenlänge einen relativ komplizierten Verlauf auf. Die Hauptmaxima bei den Wellenlängen der drei Grundfarben sind üblicherweise ziemlich breit. Zusätzlich weisen die spektralen Papierempfindlichkeiten für die drei Grundfarben eine nicht zu vernachlässigende Überlappung auf. Ausserdem haben die spektralen Empfindlichkeiten häufig noch Nebenmaxima. Dieser relativ komplizierte Verlauf hat zur Folge, dass beispielsweise aus einer Erhöhung der Blaubelichtung nicht nur eine Erhöhung der Konzentration des Farbstoffes der Komplementärfarbe gelb in dem Fotopapier resultiert, sondern auch eine Erhöhung der Konzentrationen des Magenta- und des Cyan-Farbstoffes. Die Berücksichtigung solcher parasitärer Nebenabsorptionen im Fotopapier wird zusätzlich dadurch erschwert, dass üblicherweise der Zusammenhang zwischen der Intensität der Belichtung in einer Farbe und der dadurch hervorgerufenen Änderung der Farbstoffkonzentration der Komplementärfarbe im Fotopapier zum einen nichtlinear ist und zum anderen für die drei Grundfarben unterschiedlich ist. Solche Effekte haben somit die nachteilige Folge, dass besonders in den Überlappungsbereichen durch das Kopierlicht nicht eindeutig voraussagbare bzw. reproduzierbare Wirkungen verursacht werden.

Erschwerdend kommt hinzu, dass Fotopapiere unterschiedlicher Hersteller oder unterschiedlicher Typen zum Teil sehr unterschiedliche spektrale Empfindlichkeiten aufweisen, was ohne aufwendige Korrkturmassnahmen zu Film- und Papiertyp-spezifischen Farbstichen beim Kopieren führt.

Zur Unterdrückung der unerwünschten Nebenabsorptionen wird in der DE-A-36 15 284 die Verwendung einer zusätzlichen Filtereinrichtung vorgeschlagen, die drei spektral schmalbandige Durchlässigkeitsbereiche in je einer Grundfarbe aufweist. Für ein subtraktives Belichtungsverfahren wird eine Vorrichtung vorgeschlagen, welche eine weisse Lichtquelle, eine Abbildungsoptik und wenigstens drei mittels einer Einrichtung selektiv einschwenkbare Farbfilter (Cyan, Magenta, Gelb) enthält. Zusätzlich ist eine Filterkombination vorgesehen, welche Licht nur innerhalb enger Spektralbereiche durchlässt. Das von der weissen Lichtquelle emittierte Licht wird zunächst durch die drei Farbfilter in den Komplementärfarben auf die gewünschte Rot-Grün-Blau-Zusammensetzung eingefärbt. Anschliessend durchläuft das Kopierlicht die zusätzliche Filtereinrichtung, welche die drei spektral schmalbandigen Durchlässigkeitsbereiche in den Farben rot, grün und blau aufweist. Nachdem das eingefärbte Kopierlicht diese Filtereinrichtung durchlaufen hat, weist seine spektrale Zusammensetzung im wesentlichen nur noch drei schmalbandige Maxima bei den Grundfarben rot, grün und blau auf. Nach Passieren eines Lichtmischschachts beaufschlagt das Kopierlicht das Negativ und wird anschliesssend durch ein Objektiv auf das Kopiermaterial geführt. Durch die spektral schmalbandige Belichtung wird erreicht, dass die spezielle Form der spektralen Empfindlichkeitskurven des Kopiermaterials bei der Belichtung vernachlässigbar ist. Insbesondere üben die Überlappungsbereiche keinen wesentlichen störenden Einfluss mehr aus, weil die Spektralbereiche, in welchen die Empfindlichkeiten der Farbschichten des Fotopapiers überlappen, weitgehend aus dem Kopierlicht ausgeblendet sind. Dies hat den zusätzlichen Vorteil, dass auf der Kopie sattere Farben erzeugt werden können.

Ein anderes Problem bei Beleuchtungsvorrichtungen für fotografische Kopiergeräte resultiert aus der von der Lichtquelle produzierten Wärme. Zu den heute am häufigsten verwendeten Lichtquellen in gattungsgemässen Beleuchtungsvorrichtungen zählen Halogenlampen. Sie haben die unerwünschte Eigenschaft, dass ein grosser Teil der von ihnen emittierten Strahlung als Wärme, also als Strahlung im Infrarotbereich, anfällt. Eine hohe Wärmebelastung kann jedoch zu erheblichen Schädigungen, beispielsweise der verschiedenen Filter oder auch der Kopiervorlagen, führen. Ebenso kann eine hohe Wärmeentwicklung nachteilige Folgen für den Kopiervorgang haben, weil sich die Betriebsbedingungen, z. B. die Temperatur, in nicht kontrollierbarer Weise ändern können.

Aus diesem Grunde werden häufig, wie beispielsweise in der EP-A-0,586,771 offenbart, Wärmeschutzfilter im Beleuchtungsstrahlengang angeordnet, welche die Eigenschaft haben, im wesentlichen nur Strahlung mit Wellenlängen unterhalb des Infrarotbereiches durchzulassen. Um einen effizienten Wärmeschutz zu erzielen, ist es jedoch notwendig, dass die Schutzfilter bis weit in den Infrarotbereich hinein sperren müssen. Solche Wärmeschutzfilter sind deshalb relativ aufwendig in der Herstellung und dementsprechend kostspielig. Eine andere Möglichkeit des Wärmeschutzes besteht in der Verwendung von sogenannten Kaltlichtspiegeln. Diese sind für Infrarotstrahlung im wesentlichen durchsichtig, reflektieren aber das sichtbare Licht.

Ausgehend von diesem Stand der Technik liegt der Erfindung die Aufgabe zugrunde, eine Beleuchtungsvorrichtung für ein fotografisches Kopiergerät zur Verfügung zu stellen, welche möglichst wenig aufwendig ist und trotzdem sowohl eine spektral schmalbandinge Belichtung als auch eine effiziente Abführung der Wärmestrahlung der Lichtquelle ermöglicht.

Die diese und noch weitere Aufgaben lösende Beleuchtungsvorrichtung für ein fotografisches Kopiergerät ist durch die Merkmale des unabhängigen Patentanspruchs gekennzeichnet.

Gemäss der Erfindung umfasst die Beleuchtungsvorrichtung also einen Umlenkspiegel, welcher im infraroten Wellenlängenbereich im wesentlichen transparent ist und welcher im sichtbaren Wellenlängenbereich ein Reflexionsvermögen aufweist, das drei spektral schmalbandige Maxima hat, die in den Wellenlängenbereichen von rotem, grünem sowie blauem Licht liegen. Diese Massnahme bringt den Vorteil mit sich, dass mehrere Funktionen, welche bisher üblicherweise von mehreren Komponenten, d. h. körperlich getrennten Einheiten, übernommen wurden, in der erfindungsgemässen Beleuchtungsvorrichtung durch nur eine bauliche Einheit, nämlich den Umlenkspiegel, ausgeübt werden. Der Umlenkspiegel dient zum einen dazu, das von der Lichtquelle emittierte Kopierlicht dem Lichtmischer zuzuführen, zum anderen sorgt er durch seine Transparenz im infraroten Wellenlängenbereich für eine effiziente Abführung der Wärmestrahlung der Lichtquelle aus dem Beleuchtungsstrahlengang. Darüber hinaus begrenzt er durch sein selektives, spektral schmalbandiges Reflexionsvermögen im sichtbaren Wellenlängenbereich das Kopierlicht auf drei schmalbandige Wellenlängenbereiche. Somit wird die Anregung der Überlappungsbereiche der spektralen Empfindlichkeitskurven des Kopiermaterials wirkungsvoll unterdrückt, ohne dass dafür zusätzliche Filtereinrichtungen vonnöten sind.

Durch die erfindungsgemässe Konzentration mehrere Funktionen auf nur ein bauliches Element, nämlich den Umlenkspiegel, kommt die erfindungsgemässe Beleuchtungsvorrichtung mit weniger Komponenten aus als vergleichbare, bekannte Vorrichtungen. Dadurch reduziert sich der Aufwand, wobei trotzdem eine vorteilhafte spektral schmalbandige Belichtung und eine effiziente Abführung der Wärmestrahlung gewährleistet ist.

Ferner ist es auch möglich, den Umlenkspiegel zwischen zwei Positionen kippbar anzuordnen, wobei er in der ersten Position das von der Lichtquelle kommende Kopierlicht in den Lichtmischer hinein umlenkt, und in der zweiten Position das Kopierlicht von dem Lichtmischer weglenkt. Bei einer solchen Ausgestaltung der erfindungsgemässen Beleuchtungsvorrichtung übernimmt der Umlenkspiegel somit zusätzlich die Funktion einer Verschlusseinrichtung, woraus eine weitere Reduktion der benötigten Komponenten resultiert.

Weitere vorteilhafte Massnahmen und Ausgestaltungen der erfindungsgemässen Beleuchtungsvorrichtung ergeben sich aus den abhängigen Ansprüchen.

Im folgenden wird die Erfindung anhand von Ausführungsbeispielen und anhand der Zeichnung näher erläutert. In der schematischen, nicht massstäblichen Zeichnung zeigen:
- Fig. 1:: ein schematische Skizze eines ersten Ausführungsbeispiels der erfindungsgemässen Beleuchtungsvorrichtung,
- Fig. 2:: ein Diagramm, welches das Reflexionsvermögen des Umlenkspiegels als Funktion der Wellenlänge zeigt,
- Fig. 3:: wie Fig. 2, jedoch für einen grösseren Wellenlängenbereich,
- Fig. 4:: eine schematische Skizze eines zweiten Ausführungsbeispiels der erfindungsgemässen Beleuchtungsvorrichtung mit dem Umlenkspiegel in der ersten Position und
- Fig. 5:: eine schematische Skizze des zweiten Ausführungsbeispiels der erfindungsgemässen Beleuchtungsvorrichtung mit dem Umlenkspiegel in der zweiten Position.

Bei der nachstehenden Beschreibung der bevorzugten Ausführungsbeispiele anhand der Zeichnung sind identische oder von der Funktion her gleichwertige Teile mit den gleichen Bezugszeichen versehen.

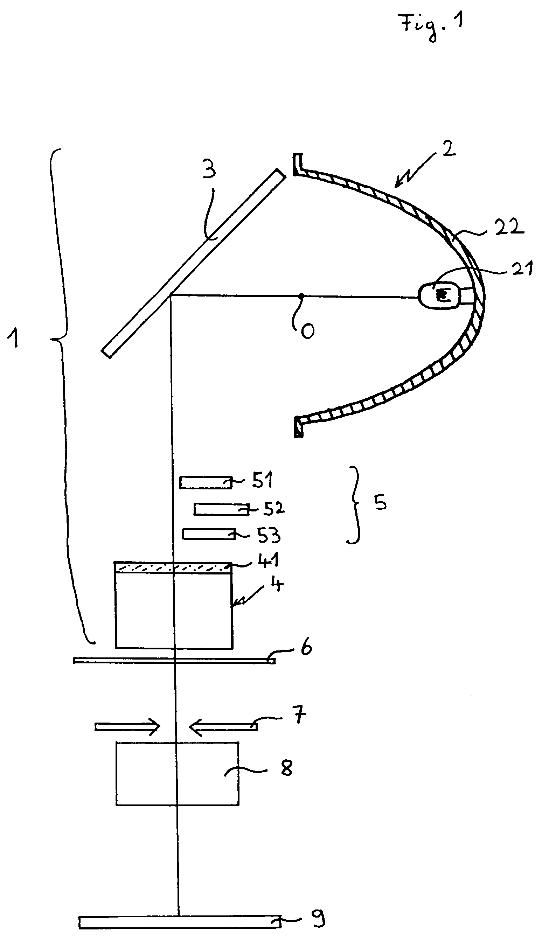

In Fig. 1 ist ein erstes Ausführungsbeispiel der erfindungsgemässen Beleuchtungsvorrichtung, welche gesamthaft mit dem Bezugszeichen 1 bezeichnet ist, skizziert. Die Darstellung beschränkt sich auf die für das Verständnis der Erfindung wesentlichen Teile. Aus Gründen der besseren Übersichtlichkeit sind an sich hinreichend bekannte Einzelheiten, wie beispielsweise Halte- und Betätigungseinrichtungen, nicht dargestellt.

Die Beleuchtungsvorrichtung 1 für ein fotografisches Kopiergerät umfasst eine Lichtquelle 2 zum Aussenden von Kopierlicht, einen Lichtmischer 4 sowie Mittel, um das von der Lichtquelle 2 ausgesendete Kopierlicht dem Lichtmischer 4 zuzuführen. Gemäss der Erfindung umfassen diese Mittel einen Umlenkspiegel 3, welcher im infraroten Wellenlängenbereich im wesentlichen transparent ist und welcher im sichtbaren Wellenlängenbereich ein Reflexionsvermögen aufweist, das drei spektral schmalbandige Maxima hat, die in den Wellenlängenbereichen von rotem, grünem sowie blauem Licht liegen.

Vorteilhafterweise weisen die drei Maxima des Reflexionsvermögens des Umlenkspiegels 3 jeweils eine Breite von weniger als 100 nm auf. Insbesondere weisen die Maxima in den Wellenlängenbereichen von grünem und blauem Licht bevorzugt jeweils eine Breite von weniger als 50 nm auf. Mit dem Begriff Breite ist dabei die Halbwertsbreite gemeint.

Bevorzugt ist der Umlenkspiegel 3 so ausgestaltet, dass seine Funktion auf dem Prinzip der Interferenz beruht, und er ein vernachlässigbar kleines Absorptionsvermögen aufweist. Dies hat den Vorteil, dass seine Wärmeaufnahme äusserst gering ist, weil der von ihm nicht reflektierte Strahlenanteil des ihn beaufschlagenden Lichts grösstenteils durchgelassen, nicht aber absorbiert wird. Somit lassen sich thermisch bedingte Schädigungen des Umlenkspiegels 4 effizient vermeiden.

Zusätzlich zu der Beleuchtungsvorrichtung 1 sind in Fig. 1 noch weitere Komponenten dargestellt, welche üblicherweise in fotografischen Kopiergeräten vorgesehen sind. Da diese Komponenten an sich hinreichend bekannt sind, bedürfen sie keiner näheren Erläuterung. Lichtausgangsseitig des Lichtmischers 4 befindet sich im Beleuchtungsstrahlengang, welcher symbolisch durch eine optische Achse O dargestellt ist, eine Filmbühne 6 zur Führung und Auflage für eine nicht eingezeichnete Kopiervorlage. Im weiteren Beleuchtungsstrahlengang ist eine Verschlusseinrichtung 7 angeordnet sowie eine Abbildungsoptik 8, mit welcher die aufzubelichtende Kopiervorlage auf Kopiermaterial, für dessen Führung und Auflage eine Kopierbühne 9 vorgesehen ist, abgebildet wird.

Das in Fig. 1 dargestellte Ausführungsbeispiel der erfindungsgemässen Beleuchtungsvorrichtung ist für ein subtraktives Belichtungsverfahren ausgelegt. Aus diesem Grunde ist zwischen dem Umlenkspiegel 3 und dem Lichtmischer 4 im Beleuchtungsstrahlengang eine Filteranordnung 5 zum Einfärben des Kopierlichts vorgesehen, welche Transmissionsfilter 51,52,53 in den Farben magenta, cyan und gelb enthält. Die Transmissionsfilter 51, 52, 53 sind bevorzugt Interferenzfilter und können jeweils einstückig oder in Form von zwei Filterhälften ausgestaltet sein. Durch nicht dargestellte, weil an sich bekannte, Betätigungs- und Antriebseinrichtungen sind die drei Transmissionsfilter 51,52,53 jeweils unabhängig voneinander mehr oder weniger tief in den Beleuchtungsstrahlengang einfahrbar, so dass ein mehr oder weniger grosser Anteil des Querschnitts des Kopierlichtstrahlenbündels von ihnen erfasst wird. Auf diese Weise können die Farbanteile des Kopierlichts in den drei Grundfarben rot, grün und blau, im wesentlichen unabhängig voneinander, auf die gewünschten Werte abgeschwächt werden, um die benötigte Einfärbung des Kopierlichts zu erzielen.

Die Lichtquelle 2 umfasst einen Ellipsoid-Reflektor 22 sowie eine Halogenlampe 21, die so in dem Ellipsoid-Reflektor 22 angeordnet ist, dass sich die Wendel im wesentlichen in einem der Brennpunkte des Ellipsoid-Reflektors 22 auf der optischen Achse O befindet.

Der Lichtmischer 4 ist bei diesem Ausführungsbeispiel als Lichtschacht ausgestaltet, der lichteingangsseitig eine Streuscheibe 41 aufweist. Der Lichtmischer 4 dient zur innigen Durchmischung des Kopierlichts und zur Homogenisierung der Beleuchtungsstärke über die Fläche der Kopiervorlage.

Der Umlenkspiegel 3 ist so im Beleuchtungsstrahlengang zwischen der Lichtquelle 2 und dem Lichtschacht 4 angeordnet, dass seine reflektierende Fläche gegen die optische Achse um einen Winkel von etwa 45° geneigt ist. Die Entfernungen zwischen der Lichtquelle 2 und dem Umlenkspiegel 3 sowie zwischen dem Umlenkspiegel 3 und dem Lichtmischer 4 sind dabei so bemessen, dass die Wendel der Halogenlampe 21 in den Bereich der Streuscheibe 41 des Lichtmischers 4 abgebildet wird.

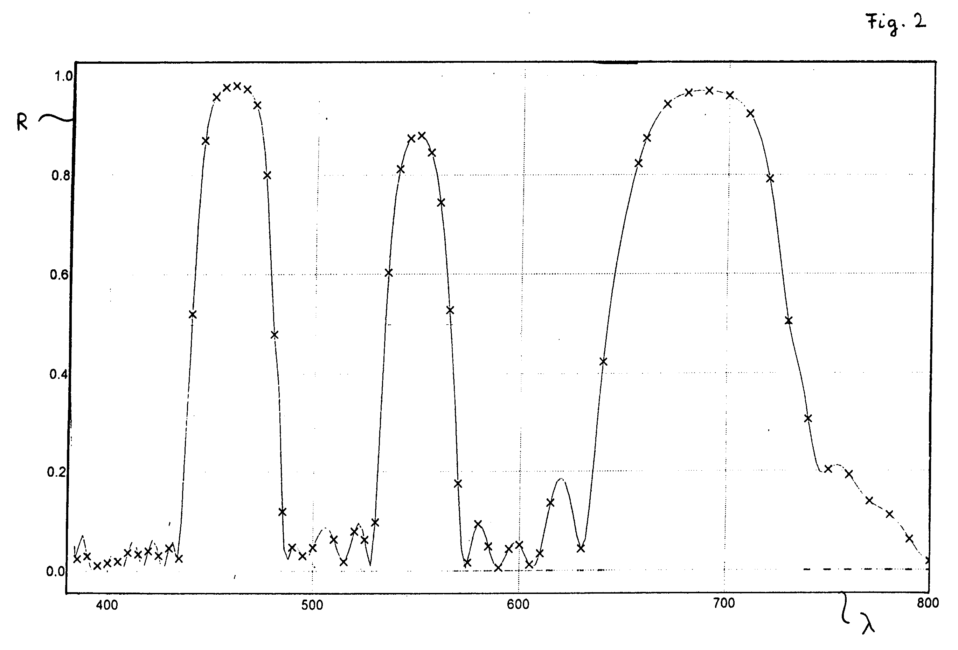

Die Funktionsweise dieses Ausführungsbeispiels der erfindungsgemässen Beleuchtungsvorrichtung ist wie folgt: Das von der Halogenlampe 21 emittierte, im wesentlichen weisse Licht beaufschlagt den Umlenkspiegel 3. Nimmt man vereinfachender Weise an, dass das Licht der Halogenlampe 21 ideal weiss ist, so bedeutet dies, dass zumindest im sichtbaren Wellenlängenbereich die spektrale Zusammensetzung des Lichtes derart ist, dass alle Wellenlängen mit der gleichen Häufigkeit im Licht vertreten sind. Die Intensität als Funktion der Wellenlänge ist konstant. Da der Umlenkspiegel 3 im infraroten Wellenlängenbereich transparent ist, lässt er den spektralen Anteil des Lichtes, der ihn in Form von Wärmestrahlung beaufschlagt, im wesentlichen ungehindert passieren. Auf diese Weise wird eine effiziente Abführung der Wärmestrahlung der Lichtquelle aus dem Beleuchtungsstrahlengang realisiert. Zur Aufnahme der den Umlenkspiegel 3 transmittierenden Wärmestrahlung kann beispielsweise in Beleuchtungsrichtung hinter dem Umlenkspiegel 3 eine in Fig. 1 nicht dargestellte Wärmeabsorptionseinrichtung vorgesehen sein. Erfindungsgemäss reflektiert der Umlenkspiegel 3 den Anteil des Lichtes mit Wellenlängen im sichtbaren Bereich nur selektiv, und zwar abhängig von der Wellenlänge. Das Reflexionsvermögen des Umlenkspiegels 3 weist im sichtbaren Wellenlängenbereich drei spektral schmalbandige Maxima auf (siehe Fig. 2), die in den Wellenlängenbereichen von rotem, grünem und blauem Licht liegen. Somit können die Anteile des Lichts, deren Wellenlängen zwischen dem Rot- und dem Grünbereich bzw. zwischen dem Grün- und dem Blaubereich liegen, den Umlenkspiegel ebenfalls im wesentlichen ungehindert passieren, werden also aus dem Beleuchtungsstrahlengang entfernt. Dagegen werden die Anteile des Lichts, deren Wellenlängen im Bereich der Maxima des Reflexionsvermögens des Umlenkspiegels 3 liegen, von dem Umlenkspiegel in Richtung der Filteranordnung 5 bzw. der Streuscheibe 41 des Lichtmischers 4 reflektiert. Somit ist die spektrale Zusammensetzung des Kopierlichts, welches die Filteranordnung 5 beaufschlagt, derart, dass im wesentlichen nur noch Wellenlängen aus drei spektral schmalbandigen Bereichen im Kopierlicht vertreten sind. Farblich gesehen enthält das Kopierlicht also nur noch drei spektral schmalbandige Komponenten in den Farben rot, blau bzw. grün.

Die Filteranordnung 5 färbt dann, wie bereits vorne beschrieben, das Kopierlicht ein, indem die drei Farbkomponenten in den Grundfarben, rot, blau, grün durch die entsprechend tief in den Beleuchtungsstrahlengang eingefahrenen Transmissionsfilter 51,52,53 jeweils auf die gewünschte Intensität abgeschwächt werden. Diese gewünschte Intensität lässt sich beispielsweise unter Berücksichigung der Ergebnisse einer vorher durchgeführten Ausmessung der Kopiervorlage berechnen. Das eingefärbte Kopierlicht gelangt dann durch die Streuscheibe 41 in den Lichtmischer 4 , wo es innig vermischt wird.

Ist die Beleuchtungseinrichtung 1 in ein übliches fotografisches Kopiergerät integriert, wie dies in Fig. 1 symbolisch angedeutet ist, so durchdringt das eingefärbte Kopierlicht nach dem Verlassen des Lichtmischers 4 die auf der Filmbühne 6 plazierte Kopiervorlage. Wird nun die Verschlusseinrichtung 7 geöffnet, so belichtet das Kopierlicht das Kopiermaterial, beispielsweise Fotopapier, welches auf der Kopierbühne 9 plaziert ist. Die Zeitdauer der Belichtung ist durch Öffnen bzw. Schliessen der Verschlusseinrichtung 7 steuerbar. Die Abbildungsoptik 8 bildet bei geöffneter Verschlussvorrichtung 7 die Kopiervorlage auf das Kopiermaterial ab.

Der im infraroten Wellenlängenbereich transparente Umlenkspiegel 3 bei der erfindungsgemässen Beleuchtungsvorrichtung hat im Vergleich zu den bei bekannten Beleuchtungsvorrichtungen häufig verwendeten Infrarot-Sperrfiltern den Vorteil, dass er einfacher und kostengünstiger herstellbar ist. Übliche Infrarot-Sperrfilter, die in Transmission betrieben werden, sind für Wellenlängen unterhalb des Infrarotbereiches transparent und reflektieren die Infrarotstrahlung. Um durch solche Filter einen effektiven Wärmeschutz zu erzielen, ist es notwendig, dass diese Filter bis weit in den Infrarotbereich hinein sperren. Solche Wärmeschutzfilter sind daher üblicherweise herstellungstechnisch ziemlich kompliziert und aufwendig.

Die erfindungsgemässe Beleuchtungseinrichtung hat den Vorteil, dass mehrere Funktionen, welche bei bekannten Vorrichtungen der gattungsgemässen Art üblicherweise auf mehrere körperlich getrennten Einheiten verteilt sind, durch nur eine bauliche Einheit, nämlich den Umlenkspiegel 3, ausgeübt werden. Der Umlenkspiegel 3 dient zum einen dazu, das von der Lichtquelle 2 emittierte Kopierlicht dem Lichtmischer zuzuführen, zum anderen sorgt er durch seine Transparenz im infraroten Wellenlängenbereich für eine effiziente Abführung der Wärmestrahlung der Lichtquelle 2 aus dem Beleuchtungsstrahlengang, und darüber hinaus begrenzt er durch sein selektives, spektral schmalbandiges Reflexionsvermögen im sichtbaren Wellenlängenbereich das Kopierlicht auf drei schmalbandige Wellenlängenbereiche. Somit wird die Anregung der Überlappungsbereiche der spektralen Empfindlichkeitskurven des Kopiermaterials wirkungsvoll unterdrückt, ohne dass dafür zusätzliche Filtereinrichtungen vonnöten sind. Bei bekannten Beleuchtungseinrichtungen wird der Wärmeschutz je nach Ausgestaltung entweder durch Infrarot-Sperrfilter oder durch Kaltlichtspiegel - dies sind Spiegel, die im Infrarotbereich durchsichtig sind und im sichtbaren Bereich ein spektral im wesentlichen konstantes Reflexionsvermögen aufweisen - realisiert. Um das Kopierlicht spektral schmalbandig zu machen, sind dann zusätzliche Filtereinrichtungen notwendig, die normalerweise in Transmission betrieben werden und spektral eng begrenzte Durchlässigkeitsbereiche aufweisen. Somit weist die erfindungsgemässe Beleuchtungsvorrichtung den Vorteil auf, weniger aufwendig zu sein und trotzdem die vorteilhafte spektral schmalbandige Belichtung sowie einen effizienten Wärmeschutz zu ermöglichen.

In einer bevorzugten Ausgestaltung ist der Umlenkspiegel 3 auch im ultravioletten (UV) Wellenlängenbereich im wesentlichen transparent. Der Umlenkspiegel 3 übernimmt dann auch noch die Funktion eines effizienten UV-Schutzes. Dies hat den Vorteil, dass auf zusätzliche UV-Cut-off-Filter verzichtet werden kann, was den apparativen Aufwand weiter reduziert.

Es versteht sich, dass das in Fig. 1 dargestellte Ausführungsbeispiel auch noch Mittel zum Messen und Analysieren des eingefärbten Kopierlichts enthalten kann. Beispielsweise kann im Beleuchtungsstrahlengang hinter dem Lichtmischer ein partiell durchlässiger Spiegel angeordnet sein, mit welchem ein Teil des eingefärbten Kopierlichts einer Messeinrichtung zugeführt wird, mit der feststellbar ist, ob das eingefärbte Kopierlicht die gewünschte farbliche Zusammensetzung aufweist.

Natürlich kann die erfindungsgemässe Beleuchtungsvorrichtung auch für ein additives Belichtungsverfahren ausgestaltet sein. Für eine solchen Ausgestaltung enthält beispielsweise bei dem in Fig. 1 dargestellten Ausführungsbeispiel die Filteranordnung 5 zumindest drei Farbfilter in den Grundfarben grün, blau und rot, die sequentiell in den Beleuchtungsstrahlengang einbringbar sind. Beispielsweise kann ein an sich bekanntes Farbfilterrad mit einer Filterbestückung vorgesehen sein, die zumindest Filter in den drei Grundfarben umfasst. Typischerweise sind solche Filterräder motorisch antreibbar. Zur Aufbelichtung der Kopiervorlage schwenkt das Filterrad nacheinander die drei Farbfilter in rot, grün und blau für die Dauer der jeweils errechneten Belichtungszeit in den Strahlengang ein. Bei einer solchen Ausgestaltung lassen sich mit der erfindungsgemässen Beleuchtungsvorrichtung auch additive Belichtungsverfahren mit den Vorzügen einer spektral schmalbandigen Belichtung durchführen. Der Umlenkspiegel 3 sorgt dafür, dass das Kopierlicht, welches die Filteranordnung 5 beaufschlagt, auf drei spektral engbandige Wellenlängenbereiche beschränkt ist.

Zur Verdeutlichung der reflektierenden Eigenschaften des Umlenkspiegels 3 der erfindungsgemässen Beleuchtungsvorrichtung im Wellenlängenbereich des sichtbaren Lichts zeigt Fig. 2 ein Diagramm, in welchem mit beispielhaftem Charakter das Reflexionsvermögen des Umlenkspiegels 3 als Funktion der Wellenlänge dargestellt ist. Auf der mit λ bezeichneten Achse ist die Wellenlänge des Lichts in der Einheit Nanometer aufgetragen, auf der mit R bezeichneten Achse ist die Intensität des vom Spiegel reflektierten Lichts aufgetragen. Diese Intensität ist auf die Intensität des den Umlenkspiegel 3 beaufschlagenden Lichts normiert, d. h. eine Intensität des reflektierten Lichts von 1 bedeutet, dass das auftrefende Licht vollständig, also zu 100% reflektiert wird, eine Intensität des reflektierten Lichts von 0 bedeutet, dass das auftreffende Licht überhaupt nicht reflektiert wird. Aus dem Diagramm ist eindeutig ersichtlich, dass das Reflexionsvermögen des Umlenkspiegels 3 drei spektral schmalbandige Maxima aufweist, die in den Wellenlängenbereichen von rotem, grünem sowie blauem Licht liegen. Folglich enthält das von dem Umlenkspiegel 3 reflektierte Licht im wesentlichen nur noch Wellenlängen, die zu den drei schmalbandig begrenzten Bereichen gehören. Licht mit Wellenlängen zwischen dem Rot- und dem Grün-Bereich bzw. zwischen dem Grün- und dem Blau-Bereich wird von dem Umlenkspiegel im wesentlichen nicht reflektiert, so dass es aus dem Beleuchtungsstrahlengang entfernt wird.

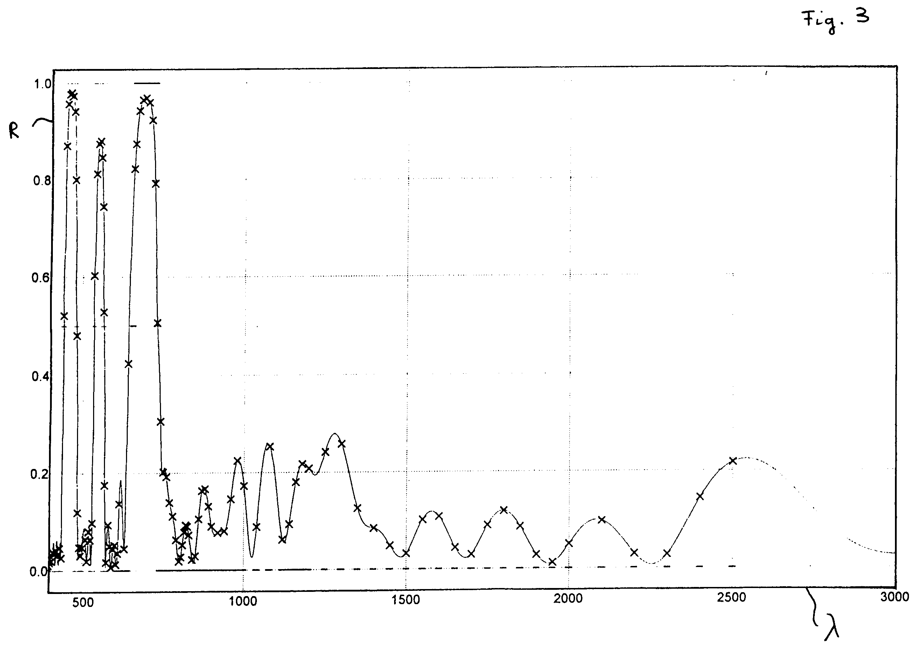

Das in Fig. 3 gezeigte Diagramm entspricht dem in Fig. 2 dargestellten, jedoch ist in Fig. 3 ein grössere Wellenlängenbereich dargestellt. Dieses Diagramm demonstriert die Wärmeschutzfunktion des Umlenkspiegels 3. Es ist deutlich zu erkennen, dass der Umlenkspiegel 3 für Licht mit Wellenlängen oberhalb des sichtbaren Spektralbereichs, also z. B. für Infrarotstrahlung, im wesentlichen transparent ist.

Die Herstellung des Umlenkspiegels 3 kann mittels an sich bekannter Verfahren, wie beispielsweise dem Aufbringen, z. B. durch Aufdampfen, von mehreren übereinanderliegenden Schichten auf einen als Substrat dienenden Träger erfolgen. Die übereinanderliegenden Schichten sind dabei typischerweise abwechselnd niedrig- und hochbrechend. Die Anzahl und die Dicke der einzelnen Schichten kann, z. B. mittels computerunterstützter Berechnungen, unter dem Aspekt, das gewünschte Reflexionsvermögen möglichst gut zu realisieren, optimiert werden. Üblicherweise geht man dazu wie folgt vor: Ausgehend von dem gewünschten Reflexionsvermögen, welches der Umlenkspiegel aufweisen soll, gibt man eine Anfangskonfiguration für die Anzahl und die Dicke der einzelnen Schichten vor. Diese Anfangskonfiguration dient als Startparameter für computergestütze Berechnungen, mittels derer dann die Anfangskonfiguration iterativ solange geändert wird, bis das erzielte Reflexionsvermögen dem gewünschten möglichst nahe kommt. Solche Verfahren zur Berechnung der optimalen Anzahl und jeweiligen Dicke aufeinanderfolgender Schichten sind beispielsweise aus der Technologie der Interferenzfilterherstellung hinreichend bekannt und bedürfen daher keiner näheren Erläuterung.

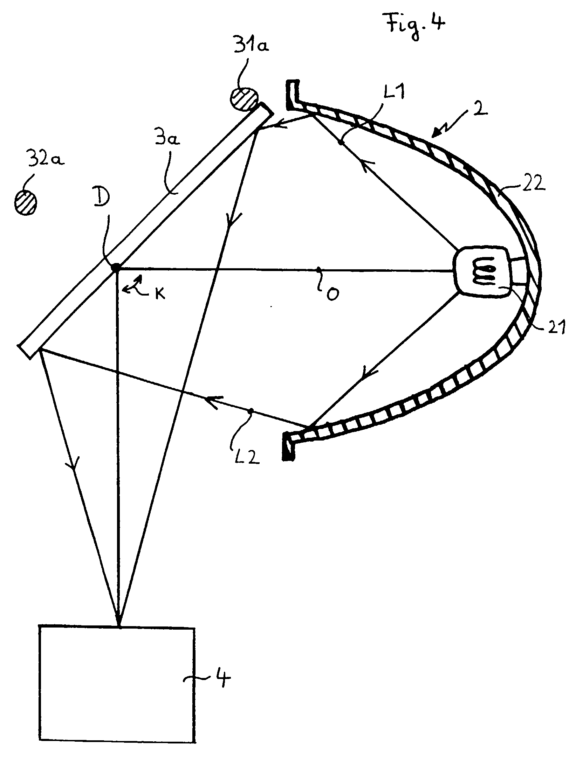

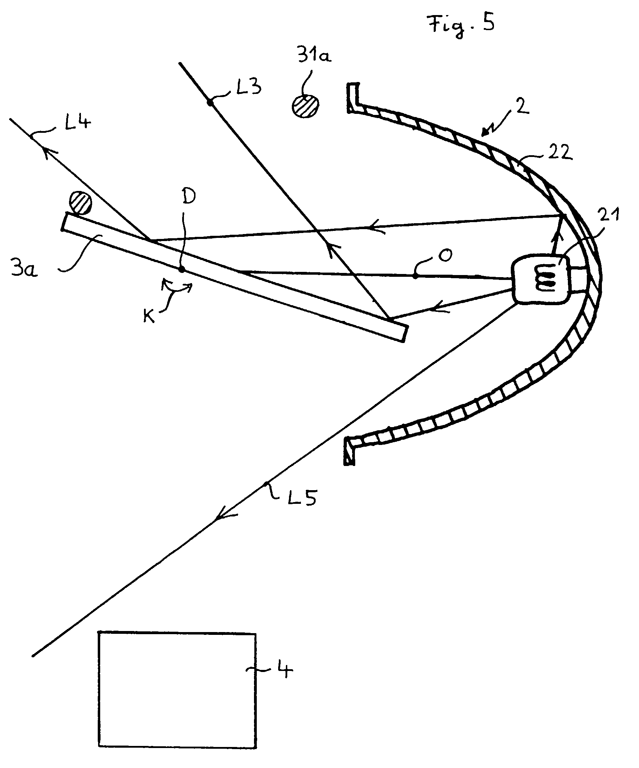

In Fig. 4 und Fig. 5 ist ein zweites Ausführungsbeispiel der erfindungsgemässen Beleuchtungsvorrichtung mit den wesentlichen Teilen dargestellt. Die folgende Beschreibung bezieht sich nur auf die Unterschiede zum ersten Ausführungsbeispiel. Es versteht sich, dass die vornestehenden Erläuterungen in sinngemässer Weise auch für das zweite Ausführungsbeispiel gelten. Aus Günden der besseren Übersichtlichkeit sind in den Fign. 3 und 4 die Filteranordnung 5 und die Streuscheibe 41 nicht dargestellt.

Das zweite Ausführungsbeispiel unterscheidet sich von dem ersten im wesentlichen dadurch, dass der Umlenkspiegel 3a zwischen zwei Positionen kippbar ist, wobei er in der ersten Position das von der Lichtquelle 2 kommende Kopierlicht in den Lichtmischer hinein umlenkt und in der zweiten Position das Kopierlicht daran hindert, in den Lichtmischer einzudringen. Fig. 4 zeigt den Umlenkspiegel 3a in der ersten Position, Fig. 5 zeigt den Umlenkspiegel 3a in der zweiten Position. Der Umlenkspiegel 3a ist drehbar um eine Drehachse D gelagert, wie dies durch den Doppelpfeil K in Fig. 4 und Fig. 5 angedeutet ist. Die Drehachse D ist bevorzugt ungefähr senkrecht zu der Verbindungslinie der beiden Brennpunkte des Ellipsoid-Reflektors 22 orientiert und schneidet diese Verbindungslinie etwa in ihrer Mitte. Zusätzlich sind zwei Anschläge 31a und 32a vorgesehen, welche die beiden Positionen des Umlenkspiegels 3a festlegen. Befindet sich der Umlenkspiegel 3a in der ersten Position (Fig. 4), so liegt seine Rückseite an dem ersten Anschlag 31a an. In dieser Position reflektiert der Umlenkspiegel 3a das Licht in den Lichtmischer hinein, wie dies symbolisch durch die beiden Lichtstrahlen L1, L2 angedeutet ist. Um den Umlenkspiegel 3a in die zweite Position (Fig. 5) zu kippen, erfolgt, beispielsweise durch nicht dargestellte motorische Antriebsmittel, eine Rotation des Umlenkspiegels um die Drehachse D - bei der in Fig. 4 bzw. Fig. 5 gewählten Darstellung im Uhrzeigersinn - bis die Rückseite des Umlenkspiegels 3a an dem zweiten Anschlag 32a anliegt. Befindet sich der Umlenkspiegel 3a in dieser zweiten Position, so kann das von ihm umgelenkte Licht nicht mehr in den Lichtmischer 4 gelangen, wie dies symbolisch durch die beiden Lichtstrahlen L3,L4 in Fig. 5 dargestellt ist. Es versteht sich, dass die Lichtquelle 2 und der Lichtschacht 4 relativ zueinander so angeordnet sind, dass von der Lichtquelle 2 ausgesendete Lichtstrahlen, welche nicht auf den Umlenkspiegel 3a treffen auch nicht in den Lichtmischer 4 gelangen können. Dieser Sachverhalt ist in Fig. 5 symbolisch durch den Lichtstrahl L5 dargestellt.

Das zweite Ausführungsbeispiel der erfindungsgemässen Beleuchtungseinrichtungen bringt den Vorteil mit sich, dass der Umlenkspiegel 3a neben den bereits vorne erläuterten Funktionen zusätzlich noch die Funktion einer Verschlusseinrichtung übernimmt, mit der das Kopierlicht nach erfolgter Belichtung vom fotografischen Kopiermaterial ferngehalten werden kann. Durch diese Massnahme kann auf zusätzliche Verschlusseinrichtungen verzichtet werden, woraus eine weitere Reduktion der benötigten Komponenten und damit des Aufwandes resultiert.

Vor Beginn der Aufbelichtung einer Kopiervorlage befindet sich der Umlenkspiegel 3a in der zweiten Position (Fig. 5), so dass das Kopierlicht von dem Kopiermaterial ferngehalten wird. Nachdem beispielsweise im Falle eines subtraktiven Belichtungsverfahrens die Transmissionfilter zum Einfärben des Kopierlichts in die korrekte Position gebracht sind, bzw. im Falle eines additiven Belichtungsverfahrens die Belichtungszeiten für die drei Grundfarben bekannt sind, wird der Umlenkspiegel 3a in die erste Position (Fig. 4) gekippt, so dass das Kopierlicht das Kopiermaterial beaufschlagen kann. Nach Ablauf der Belichtungszeit wird der Umlenkspiegel 3a wieder in die zweite Position (Fig. 5) gekippt und verhindert somit eine weitere Beaufschlagung des Kopiermaterials mit Kopierlicht.

Eine Variante der Ausgestaltung des zweiten Ausführungsbeispiels besteht darin, den zweiten Anschlag 32a so zu plazieren, dass die reflektierende Fläche des Umlenkspiegels 3a, wenn dieser sich in der zweiten Position befindet, parallel zu der Lichteintrittsfläche des Lichtmischers 4 liegt.

Die erfindungsgemässe Beleuchtungsvorrichtung hat also den Vorteil, dass mehrere Funktionen, welche bisher üblicherweise von mehreren Komponenten, d. h. körperlich getrennten Einheiten, übernommen wurden, in der erfindungsgemässen Beleuchtungsvorrichtung durch nur eine bauliche Einheit, nämlich den Umlenkspiegel 3;3a, ausgeübt werden. Der Umlenkspiegel 3; 3a dient zum einen dazu, das von der Lichtquelle 2 emittierte Kopierlicht dem Lichtmischer 4 zuzuführen, zum anderen sorgt er durch seine Transparenz im infraroten Wellenlängenbereich für eine effiziente Abführung der Wärmestrahlung der Lichtquelle 2 aus dem Beleuchtungsstrahlengang. Darüber hinaus begrenzt er durch sein selektives, spektral schmalbandiges Reflexionsvermögen im sichtbaren Wellenlängenbereich das Kopierlicht auf drei schmalbandige Wellenlängenbereiche. Zusätzlich kann der Umlenkspiegel 3a auch noch als Verschlusseinrichtung dienen. Aus dieser Konzentration der Funktionen auf nur ein bauliches Element resultiert eine deutliche Reduzierung des Aufwandes, ohne dass hierfür z. B. auf die Vorteile der spektral schmalbandigen Belichtung oder eines effizienten Wärmeschutzes verzichtet werden muss.

## Patentansprüche

1. Beleuchtungsvorrichtung für ein fotografisches Kopiergerät mit einer Lichtquelle (2) zum Aussenden von Kopierlicht, mit einem Lichtmischer (4), sowie mit Mitteln, um das von der Lichtquelle (2) ausgesendete Kopierlicht dem Lichtmischer (4) zuzuführen, dadurch gekennzeichnet, dass die genannten Mittel einen Umlenkspiegel (3;3a) umfassen, welcher im infraroten Wellenlängenbereich im wesentlichen transparent ist, und welcher im sichtbaren Wellenlängenbereich ein Reflexionsvermögen aufweist, das drei spektral schmalbandige Maxima hat, die in den Wellenlängenbereichen von rotem, grünem sowie blauem Licht liegen.

2. Vorrichtung nach Anspruch 1 dadurch gekennzeichnet, dass der Umlenkspiegel (3;3a) im ultravioletten Wellenlängenbereich im wesentlichen transparent ist.

3. Vorrichtung nach einem der Ansprüche 2 oder 3, dadurch gekennzeichnet, dass die Maxima des Reflexionsvermögens des Umlenkspiegels (3;3a) jeweils eine Breite von weniger als 100 nm aufweisen und insbesondere die Maxima in den Wellenlängenbereichen von grünem und blauem Licht eine Breite von weniger als 50 nm aufweisen.

4. Vorrichtung nach einem der vorangehenden Ansprüche, dadurch gekennzeichnet, dass zwischen dem Umlenkspiegel (3;3a) und dem Lichtmischer (4) im Beleuchtungsstrahlengang eine Filteranordnung (5) zum Einfärben des Kopierlichts vorgesehen ist.

5. Vorrichtung nach Anspruch 4, dadurch gekennzeichnet, dass die Filteranordnung (5) jeweils ein Transmissionsfilter (51,52,53) in den Farben magenta, cyan und gelb umfasst.

6. Vorrichtung nach einem der vorangehenden Ansprüche, dadurch gekennzeichnet, dass der Umlenkspiegel (3a) zwischen zwei Positionen kippbar ist, wobei er in der ersten Position das von der Lichtquelle (2) kommende Kopierlicht in den Lichtmischer (4) hinein umlenkt und in der zweiten Position das Kopierlicht von dem Lichtmischer (4) weglenkt.

7. Fotografisches Kopiergerät mit einer Beleuchtungsvorrichtung, mit einer Filmbühne (6) zur Führung und zur Auflage für eine Kopiervorlage, mit einer Abbildungsoptik (8) sowie mit einer Kopierbühne (9) zur Führung und Auflage von fotografischem Kopiermaterial, dadurch gekennzeichnet, das die Beleuchtungsvorrichtung (1) gemäss einem der vorangehenden Ansprüche ausgestaltet ist.
